# EUROPÄISCHE PATENTANMELDUNG

(11) **EP 3 939 726 A1**
(43) Veröffentlichungstag der Anmeldung: **19.01.2022**
(21) Anmeldenummer: 20186152.3
(22) Anmeldetag: 16.07.2020
(51) Int. Cl.: B23B 31/02, B23B 31/40, B23F 23/06

(54) **INNENSPANNMITTEL ZUM SPANNEN EINER MEHRZAHL VON WERKSTÜCKEN**

(71) Anmelder: Hainbuch GmbH Spannende Technik, 71672 Marbach (DE)
(72) Erfinder: Corbean, Ioan-Mircea, 71672 Marbach (DE)
(74) Vertreter: Patentanwaltskanzlei Cartagena

(57) **Zusammenfassung**

Bekannt ist ein Innenspannmittel (100) zum Spannen einer Mehrzahl von Werkstücken (110). Ein solches Innenspannmittel (100) weist eine Basis (10) mit einem in einer Haupterstreckungsrichtung ausgerichteten Spanndorn (14) mit einer Führungsfläche (14A) sowie mindestens zwei in Haupterstreckungsrichtung (2) verlagerbare Spannhülsen (60) auf, die aus Richtung eines distalen Endes des Spanndorns (14) auf die Führungsfläche (14A) des Spanndorns aufgeschoben sind. Die Spannhülsen (60) verfügen über einen mittels Verlagerung aufweitbaren Spannabschnitt (62), dessen Außenseite eine Spannfläche (62A) für jeweils eines der Werkstücke (110) aufweist.

Es wird vorgeschlagen, das Innenspannmittel (100) mindestens drei Kolbenkammern (80, 82, 84, 86) aufweisen zu lassen, die zwischen der Basis (10) und den mindestens zwei Spannhülsen (60) und zwischen den Spannhülsen (60) wirken.

## Beschreibung

Die Erfindung betrifft Innenspannmittel zum Spannen einer Mehrzahl von Werkstücken. Ein erfindungsgemäßes Innenspannmittel dient dem gemeinsamen Einspannen mehrerer Werkstücke, wobei unterschiedliche Spannflächen für die unterschiedlichen Werkstücke vorgesehen sind. Das Spannen erfolgt beim erfindungsgemäßen Innenspannmittel üblicherweise zum Zwecke einer nachfolgenden Bearbeitung der Werkstücke, insbesondere zum Zwecke einer spanenden Bearbeitung.

Insbesondere kann es dabei um die Bearbeitung von Zahnrädern gehen, die nach dem Härten gemeinsam mit zueinander fluchtender Verzahnung eingespannt werden, um gemeinsam eine abschließende spanende Bearbeitungzu erhalten.

Aus der EP 0020517 B1 ist ein Innenspannmittel zum Spannen einer Mehrzahl von Werkstücken bekannt. Dieses verfügt über eine Mehrzahl von Spannhülsen, die hintereinander auf einen Spanndorn aufgeschoben sind und zum Zwecke des Spannens axial zusammengedrückt werden können. Hierdurch werden innenkonische Bereiche der Spannhülsen auf benachbarte außenkonische Bereiche benachbarter Spannhülsen geschoben und hierdurch aufgeweitet, was wiederum dem Spannen von Werkstücken dient.

Aus dem nicht druckschriftlichen Stand der Technik ist es bekannt, mehrere ineinander liegende Zugrohre zu verwenden, um hierdurch Spannhülsen selektiv bewegen zu können.

Die bekannten Innenspannmittel werden als noch nachteilig angesehen. Insbesondere gestatten sie es nicht, Werkstücke mit einem kleinen Innendurchmessers selektiv festzuspannen.

### AUFGABE UND LÖSUNG

Aufgabe der Erfindung ist es, ein Innenspannmittel sowie Verfahrung zum Spannen und Entspannen des Innenspannmittels zur Verfügung zu stellen, die die beschriebenen Nachteile beseitigen oder mildern.

Erfindungsgemäß wird hierfür ein Innenspannmittel zum Spannen einer Mehrzahl von Werkstücken vorgeschlagen, welches über eine Basis mit in einer Haupterstreckungsrichtung ausgerichtetem Spanndorn verfügt, an dessen Außenseite eine Führungsfläche zur Führung von Spannhülsen vorgesehen ist. Als Basis des Spannmittels wird im Sinne der Erfindung die Gesamtheit der Bauteile angesehen, die im Betrieb beim Spannen und Entspannen des Spannmittels zum Spanndorn ortsfest verbleibt.

Das Innenspannmittel weist mindestens zwei in Haupterstreckungsrichtung verlagerbare Spannhülsen auf. Diese sind aus Richtung eines distalen Endes des Spanndorns auf die Führungsfläche des Spanndorns aufgeschoben. Am distalen Ende des Spanndorns ist vorzugsweise eine zur Basis gehörende Anschlagskappe vorgesehen, mittels derer die Spannhülsen beweglich auf dem Spanndorn gesichert sind. Am proximalen Ende des Spanndorns kann eine Abstandshülse aufgeschoben sein, die einen Anschlag für eine proximal erste Spannhülse oder für ein Werkstück darstellt.

Die Spannhülsen verfügen jeweils über einen mittels der Verlagerung in Haupterstreckungsrichtung aufweitbaren Spannabschnitt, dessen Außenseite eine Spannfläche für jeweils eines der Werkstücke aufweist. Die Spannflächen der verschiedenen Spannhülsen können je nach Werkstücken Spannflächen identischer Größe sein oder in Axialrichtung und/oder Radialrichtung voneinander abweichende Größen aufweisen. Im einfachsten Falle sind jedoch die Spannflächen und insbesondere vorzugsweise die vollständigen Spannhülsen identisch ausgebildet.

Die Spannhülsen sind vorzugsweise einstückig ausgebildet. Es sind aber auch mehrteilige Bauformen möglich, bei denen insbesondere der Spannabschnittvon einem Gleitabschnitt der Spannhülsen getrennt ist. Bei einer einstückigen Gestaltung ist die Spannhülse vollständig metallisch. Bei einer mehrteiligen Gestaltung kann insbesondere vorgesehen sein, dass im Spannabschnitt verformbare Zwischenelemente aus einem Elastomer oder dergleichen vorgesehen sind, mittels derer getrennte metallische Segmente des Spannabschnitts gegeneinander verlagerbar ausgebildet sind.

Erfindungsgemäß ist vorgesehen, dass das Innenspannmittel mindestens drei Kolbenkammern aufweist, die zwischen der Basis und den mindestens zwei Spannhülsen und zwischen den Spannhülsen wirken. Eine Kolbenkammer im Sinne der Erfindung ist eine volumetrisch veränderliche Kammer, die über Fluiddruck, also durch Gas oder eine Flüssigkeit ausgeübten Druck, vergrößert werden kann, während gleichzeitig eine andere Kolbenkammer entsprechend verkleinert wird. Diese Kolbenkammern wirken zwischen den Spannhülsen bzw. zwischen einer Spannhülse und der Basis. Dies bedeutet, dass die Spannhülsen durch selektive Druckbeaufschlagung mittels Gas oder Flüssigkeit vergrößert und verkleinert werden können, so dass dies eine Verlagerung der Spannhülsen in axialer Richtung bewirkt.

Mittels dieser mindestens drei Kolbenkammern ist es demnach möglich, die mindestens zwei Spannhülsen selektiv kraftzubeaufschlagen. Im Falle von nurzwei Spannhülsen ist eine der Kolbenkammern vorzugweise so ausgebildet, dass sie bei Druckbeaufschlagung die beiden Spannhülsen voneinander wegdrückt. Die anderen beiden Kolbenkammern wirken zwischen der Basis und der ersten bzw. der letzten Spannhülse und sind in der Lage, bei Druckbeaufschlagung die proximal erste Spannhülse in distale Richtung bzw. die proximal letzte und somit distale Spannhülse in proximale Richtung druckzubeaufschlagen. Mittels der mindestens drei Kolbenkammern können sich die mindestens zwei Spannhülsen somit selektiv und bidirektional bewegen.

Vorzugsweise sind es mehr als zwei Spannhülsen, die hintereinander auf den Spanndorn aufgeschoben sind. Die Zahl der Kolbenkammern ist vorzugsweise um eins höher als die Zahl der Spannhülsen. Insbesondere vorzugsweise handelt es sich um drei Spannhülsen mit vier Kolbenkammern oder um vier Spannhülsen mit fünf Kolbenkammern.

Die Kolbenkammern können innerhalb des Spanndorns vorgesehen sein und über Kopplungsstücke, die die Führungsfläche des Spandorns durchbrechen nach außen geführt sein, so sie axial mit den Spannhülsen gekoppelt sind.

Demgegenüber bevorzugt ist allerdings eine Gestaltung, bei der die Kolbenkammern abschnittsweise durch die Spannhülsen selbst gebildet sind. In diesem Falle sind die Kolbenkammern vorzugsweise als ringförmige Kolbenkammern ausgebildet.

Die Kolbenkammern können innenseitig durch die Führungsfläche des Spanndorns begrenzt sein, so dass die Kolbenkammern gleichsam extern zum Spanndorn vorgesehen sind. Eine solche Gestaltung mit externen Kolbenkammern ermöglichteine vergleichsweise kleine Bauweise. Hierdurch lassen sich insbesondere auch Werkstücke mit geringem Innendurchmesser gut spannen.

Im Falle der ersten und der letzten Kolbenkammersind diese vorzugsweise endseitig durch eine weitere Fläche der Basis begrenzt und werden im Übrigen vor der ersten bzw. letzten Spannhülse begrenzt. Im Falle der anderen Spannhülsen werden diese vorzugsweise durch die beiden benachbarten Spannhülsen und die Führungsfläche begrenzt. Die genannten, an der Bildung der Kolbenkammer beteiligten Komponenten stellen gemeinsam mit Dichtmitteln wie O-Ringen vorzugsweise abschließend alle Wandungen der jeweiligen Kolbenkammern dar.

Die Kolbenkammern sind jeweils mit mindestens einem Fluidkanal verbunden, so dass sie wahlfrei druckbeaufschlagt und druckfrei geschaltet werden können. Im Falle der genannten externen Kolbenkammern erfolgt die Fluidzuführung vorzugsweise durch Fluidkanäle, die den Spanndorn durchdringen und durch Bohrungen in der Führungsfläche in die Kolbenkammern münden.

Wie bereits erläutert, können die Spannflächen durch axiale Verlagerung der Spannhülsen aufgeweitet bzw. radial eingefahren werden. Hierfür ist vorzugsweise vorgesehen, dass die Spannhülsen an einer Innenseite des Spannabschnitts eine konische Druckfläche aufweisen und dass zur radialen Druckbeaufschlagung der Druckfläche Außenkonusflächen vorgesehen sind. Es ist daher vorzugsweise vorgesehen, dass die konische Druckfläche der Spannhülsen am Ende der Spannhülse, vorzugsweise am proximalen Ende, vorgesehen ist, so dass sie über eine vom proximalen Ende hierunter greifende Außenkonusfläche umgeben ist und durch diese nach außen gedrückt werden kann.

Vorzugsweise ist vorgesehen, dass eine zur Basis ortsfeste Außenkonusfläche und jeweils eine Außenkonusfläche an den Spannhülsen vorgesehen sind. Insbesondere vorzugsweise ist die zur Basis ortsfeste Außenkonusfläche am proximalen Ende der Führungsfläche und zur Kraftbeaufschlagung der Druckfläche der proximal ersten Spannhülse vorgesehen. Die Außenkonusflächen der Spannhülsen sind vorzugsweise distal versetzt zu den Spannabschnitten der Spannhülsen vorgesehen.

Zur Führung auf der vorzugweise zylindrischen Führungsfläche des Spanndorns weisen die Spannhülsen vorzugsweise jeweils einen Gleitabschnitt mit einer Innenseite auf, die gleitend auf der Führungsfläche des Spanndorns geführt ist. Da bevorzugt ist, dass die Kolbenkammern als externe Kolbenkammern ausgebildet sind und es daher erforderlich sein kann, zu verhindern, dass die Fluidkanäle durch die gleitende Innenseite verschlossen werden, ist es bevorzugt, dass auf der Innenseite eine Ausnehmung zur Fluidführung vorgesehen ist, die mit einer in distaler Richtung sich an den Gleitabschnitt anschließenden Kolbenkammer kommunizierend verbunden ist.

Die beschriebene Spannhülse dient dem Zweck, eine Mehrzahl von Werkstücken spannen und später wieder lösen zu können, wobei dies vorzugsweise bedeutet, dass die Spannflächen der Spannhülsen nacheinander, insbesondere in distaler Richtung aufeinander folgend, in einen Spannungszustand überführt werden bzw. nacheinander, insbesondere in proximaler Richtung aufeinander folgend, in einen Freigabezustand überführt werden.

Werden die Spannhülsen nacheinander gespannt bzw. entspannt, so steht dies nicht einer Handhabung entgegen, bei der alle Werkstücke gemeinsam aufgeschoben werden, bevor das Spannen beginnt, und/oder bei der alle Spannhülsen entspannt werden, bevor eines der Werkstücke nach Bearbeitung abgenommen wird. Alternativ ist es jedoch auch möglich, beim Spannen ein Werkstück nach dem anderen auf das Innenspannmittel aufzuschieben und dann zu spannen, bevor das jeweils nächste Werkstück aufgeschoben wird.

Vorzugsweise erfolgt das Spannen derart, dass mittels des Drucks in den Kolbenkammern die Spannhülsen in eine Relativlage zueinander verbracht werden, in der die Spannabschnitte nicht oder gering gespannt sind. Ausgehend hiervon wird bzw. werden ein erstes Werkstück oder gleich mehrere Werkstücke aufgeschoben.

Durch anschließendes Senken des Fluiddrucks in einer ersten Kolbenkammer und/oder Erhöhen des Fluiddrucks in einer weiteren und/oder letzten Kolbenkammer wird dann der Spannabschnitt der proximal ersten Spannhülse gespannt und dadurch das erste Werkstück festgespannt.

Anschließend wird, gegebenenfalls nach nachträglichem Aufschieben eines zweiten Werkstücks, durch nachfolgendes Senken des Fluiddrucks in der zweiten Kolbenkammer oder Erhöhen des Fluiddrucks in einer weiteren oder der letzten Kolbenkammer derSpannabschnitt der proximal zweiten und damit nächsten Spannhülse gespannt und dadurch das zweite Werkstück festgespannt.

Bei mehr als zwei Spannhülsen wird dies für jede Spannhülse und damit für jedes Werkstück wiederholt, bis alle Werkstücke gespannt sind.

Insbesondere vorzugsweise seht das Verfahren vor, dass zu Beginn alle Kolbenkammern unter Druck stehen und dann nacheinander in Richtung auf das proximale Ende des Spanndorns einzeln drucklos geschaltet werden, so dass am Ende nur noch die letzte, distale Kolbenkammer unter Druck steht und den Spannzustand aller Werkstücke aufrecht erhält.

Beim Entspannen ist vorzugsweise vorgesehen, dass mittels des Drucks in den Kolbenkammern die Spannhülsen nacheinander derart verlagert werden, dass die Spannung in ihren Spannabschnitten verringert wird.

Vorzugsweise erfolgt dies, indem jeweils der Druck in der Kolbenkammer auf der proximalen Seite der Spannhülse erhöht wird, so dass die Spannhülse in Richtung des distalen Endes verlagert werden kann. Die auf der gegenüberliegenden distalen Seite der Spannhülse vorgesehene Kolbenkammer ist vorzugweise zuvor bereits drucklos geschaltet worden. Insbesondere ist vorzugsweise zu Beginn des Entspannens die letzte und vorzugsweise distale Kolbenkammer drucklos geschaltet worden, um das Lösen der Werkstücke zu ermöglichen.

### KURZBESCHREIBUNG DER ZEICHNUNGEN

Weitere Vorteile und Aspekte der Erfindung ergeben sich aus den Ansprüchen und aus der nachfolgenden Beschreibung eines bevorzugten Ausführungsbeispiels der Erfindung, das nachfolgend anhand der Figuren erläutert ist.
Fig. 1 und 2 zeigen ein erfindungsgemäßes Innenspannmittel im montierten und im teilzerlegten Zustand.
Fig. 3 zeigt das Spannmittel der Fig. 1 und 2 in geschnittener Darstellung.
Fig. 4 zeigt eine Spannhülse des Innenspannmittels in vergrößerter und geschnittener Darstellung.
Fig. 5 und 6 zeigen das Innenspannmittel mit eingezeichneten Kolbenkammern sowie einen Ablaufplan zur Druckbeaufschlagung dieser Kolbenkammern beim Spannen und Entspannen.
Fig. 7A bis 7D zeigen das Spannmittel in verschiedenen Stadien des Spannens.
Fig. 8A bis 8E zeigen das Spannmittel in verschiedenen Stadien des Entspannens.

### DETAILLIERTE BESCHREIBUNG DER AUSFÜHRUNGSBEISPIELE

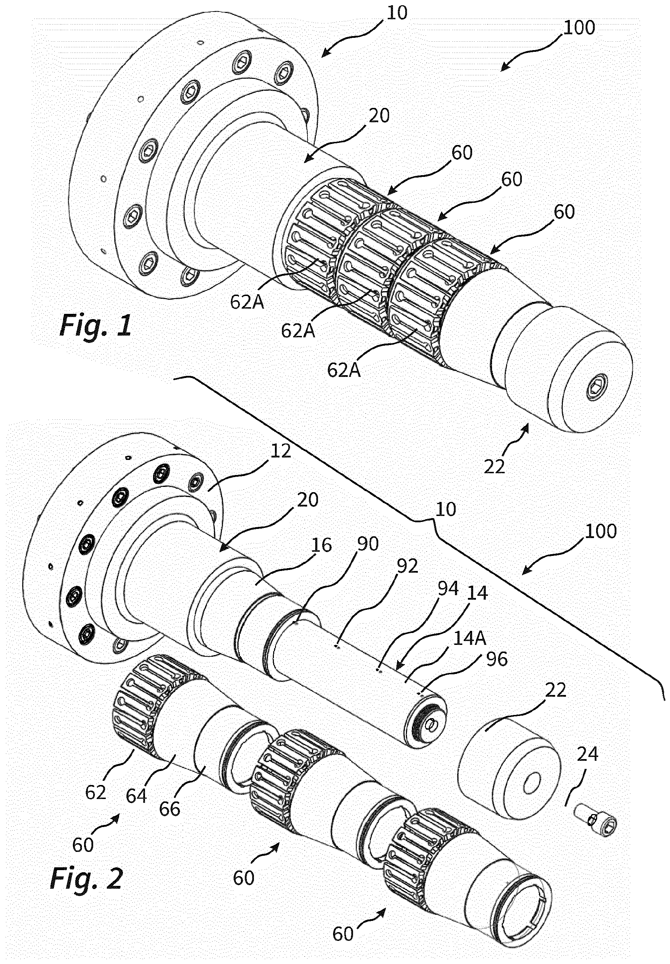

Die Figuren 1 und 2 zeigen ein erfindungsgemäßes Innenspannmittel 100, wobei dieses in Fig. 1 im montierten und in Fig. 2 im teilzerlegten Zustand dargestellt ist. Das Innenspannmittel verfügt über eine Basis 10, welche definitionsgemäß all jene Teile umfasst, die im Betrieb während des Spannens und Entspannens zueinander ortsfest verbleiben. Die Basis 10 verfügt hierzu über einen Anbauflansch 12, von dem aussich ein Spanndorn 14erstreckt. DerAnbauflansch 12 markiertdas proximale Ende der Basis. Das distale Ende der Basis am distalen Ende des Spanndorns 14 wird durch eine Anschlagskappe 22 gebildet, die mittels einer Schraube 24 endseitig befestigt ist. Ausgehend von Anbauflansch 12 folgt in distaler Richtung eine Abstandshülse 20, die auf den Spanndorn aufgeschoben ist. Auf der distalen Seite der Abstandshülse 20 weist der Spanndorn 14 eine Außenkonusfläche 16 auf. Der größte Teilabschnitt des Spanndorns 14 wird durch eine zylindrische Führungsfläche 14A gebildet, die in im Weiteren noch erläuterter Weise von Fluidkanälen 90, 91, 92, 93 durchdrungen ist. Verlagerbar auf der Führungsfläche 14Asind drei Spannhülsen 60 vorgesehen, die jeweils über einen Gleitabschnitt 66 zur gleitenden Verlagerbarkeit auf die Führungsfläche 14A, über einen Konusabschnitt mit Außenkonusfläche 64 und über einen sich daran proximal anschließenden Spannabschnitt 62 verfügen.

Die ersten Spannhülsen 60 sind in der in Fig. 1 verdeutlichten Art und Weise derart auf den Spanndorn 14 aufgeschoben, dass der Spannabschnitt 62 der proximal ersten Spannhülse 60 außenseitig der basisseitigen Außenkonusfläche 16 angeordnet ist. Die in Richtung des distalen Endes der zweiten und dritten Spannhülsen 60 sind hintereinander auf dem Spanndorn 14 und der dortigen Führungsfläche 14A derart aufgeschoben, dass ihr Spannabschnitt 62 jeweils außenseitig der Außenkonusfläche 64 der in Richtung des Anbauflansches 12 nächsten Spannhülse 60 angeordnet sind.

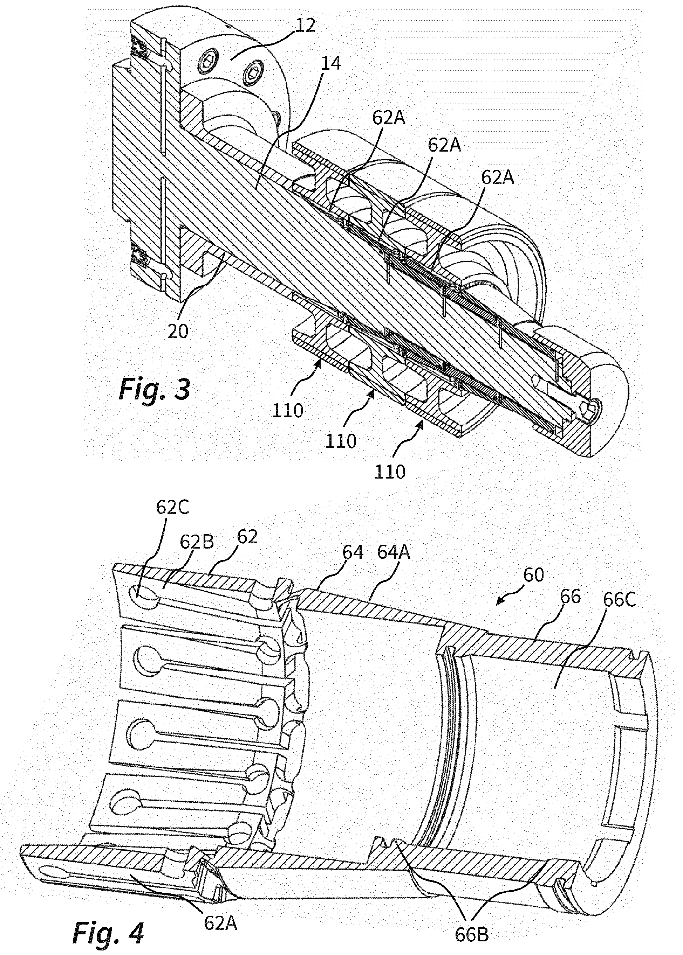

Wie sich aus der geschnittenen Darstellung der Fig. 3 ersehen lässt, ist das Spannmittel 100 dafür vorgesehen, drei Werkstücke 110 aufzunehmen. Diese Werkstücke 110 und die Spannhülsen 60 und insbesondere deren Spannflächen 62A sind derart aufeinander abgestimmt, dass jeweils eine Spannfläche 62A für ein Werkstück 110 vorgesehen ist. Bei den Werkstücken handelt es sich um Zahnräder, die nur aus Gründen der Vereinfachungohne Verzahnung dargestellt sind. Die Zahnräder werden nach dem Spannen gemeinsam spanend bearbeitet.

Fig. 4 zeigt eine der Spannhülsen 60 im Detail. Die Spannhülse weist drei Teilabschnitte auf. Der in der Figur linke Abschnitt ist ein Spannabschnitt 62 mit der außenseitigen Spannfläche 62A und einer innenliegenden Druckfläche 62B, mittels derer die Spannfläche 62A zum Zwecke des Spannens nach außen gedrückt wird. Durch Einschnitte 62C ist der Spannabschnitt 62 ausreichend verformbar. Ein Mittelabschnitt der Spannhülse 60 wird durch einen Außenkonusabschnitt 64 gebildet, der dem Zweck der Kraftbeaufschlagung der Druckfläche 62B der benachbarten Spannhülse 60 dient. Rechts in Fig. 4 ist der Gleitabschnitt 66 dargestellt, der über eine innenliegende Gleitfläche 66B verfügt, in der eine Vertiefung 66Cvorgesehen ist, um die daran angrenzende Kolbenkammerdruckbeaufschlagen und druckfrei schalten zu können.

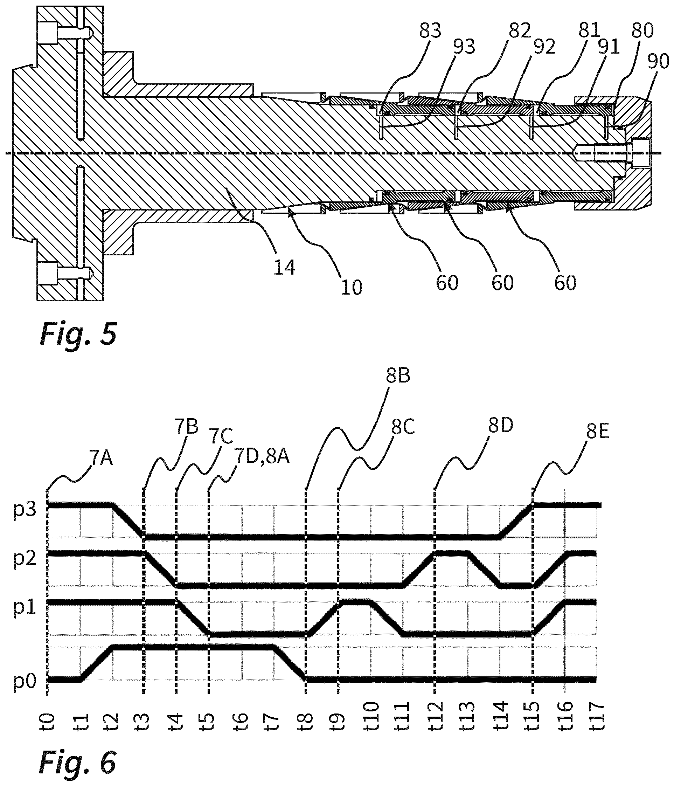

Fig. 5 zeigt die Anordnung von vier Kolbenkammern 80, 81, 82, 83, die als Ringkammern ausgebildet sind und durch die Basis 10 und die Spannhülsen 60 begrenzt werden. Bei der vorliegenden Gestaltung mit drei Spannhülsen 60 sind vier solche Kolbenkammern vorgesehen, die über nicht weiter präzisierte Fluidkanäle 90, 91, 92, 93 einzeln druckbeaufschlagt und druckfrei geschaltet werden können. Die proximal erste Kolbenkammer 83 wird innenseitig und in Richtung des proximalen Endes des Innenspannmittels durch den Spanndorn 14 begrenzt. Radial außenseitig und in Richtung des distalen Endes des Innenspannmittels wird die Kolbenkammer 83 durch die proximal erste Spannhülse 60 begrenzt. Die distale Kolbenkammer 80 wird innenseitig ebenfalls durch den Spanndorn 14 und dessen Führungsfläche 14A begrenzt. Radial außenseitig und in Richtung des distalen Endes wird sie durch eine Innenseite der Anschlagskappe 22 begrenzt. In proximaler Richtung wird die letzte Kolbenkammer 80 durch die distale, letzte Spannhülse 60 begrenzt.

Die beiden mittleren Kolbenkammern 81, 82 sind innenseitig durch die Führungsfläche 14A des Spanndorns 14 begrenzt und werden im Übrigen durch jeweils zwei der Spannhülsen 60 begrenzt.

Durch Druckbeaufschlagen beziehungsweise Druckfreischalten der Kolbenkammern 80, 81, 82, 83 können die Spannhülsen 60 in proximale Richtung, also bezogen auf Fig. 5 nach links, oder in distale Richtung, also bezogen auf Fig. 5 nach rechts, kraftbeaufschlagt werden.

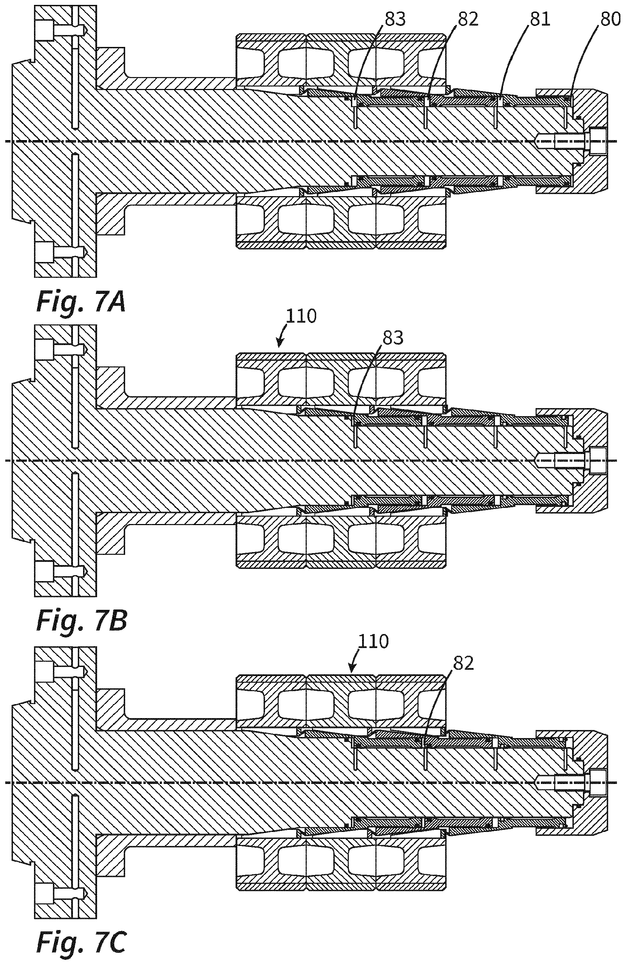

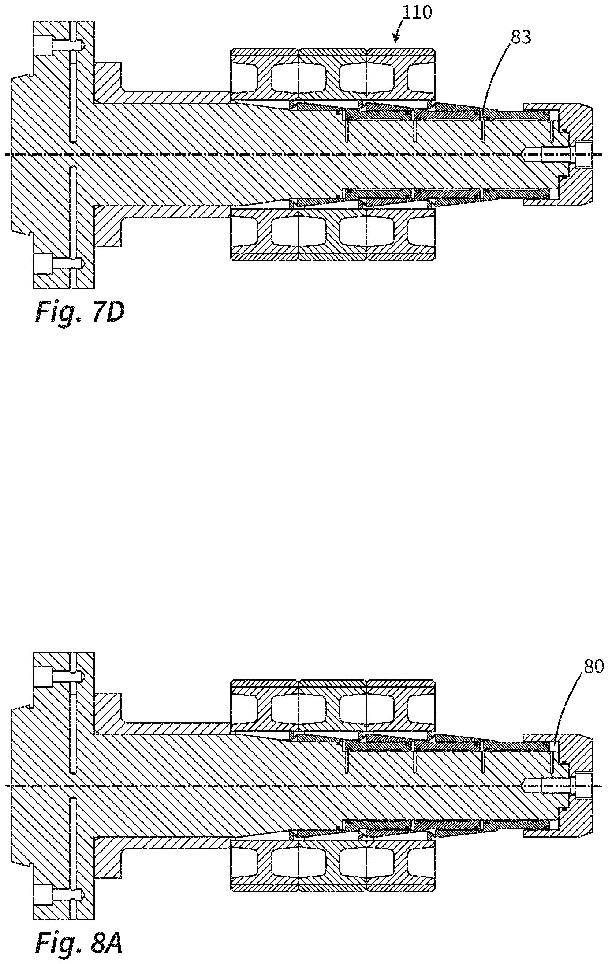

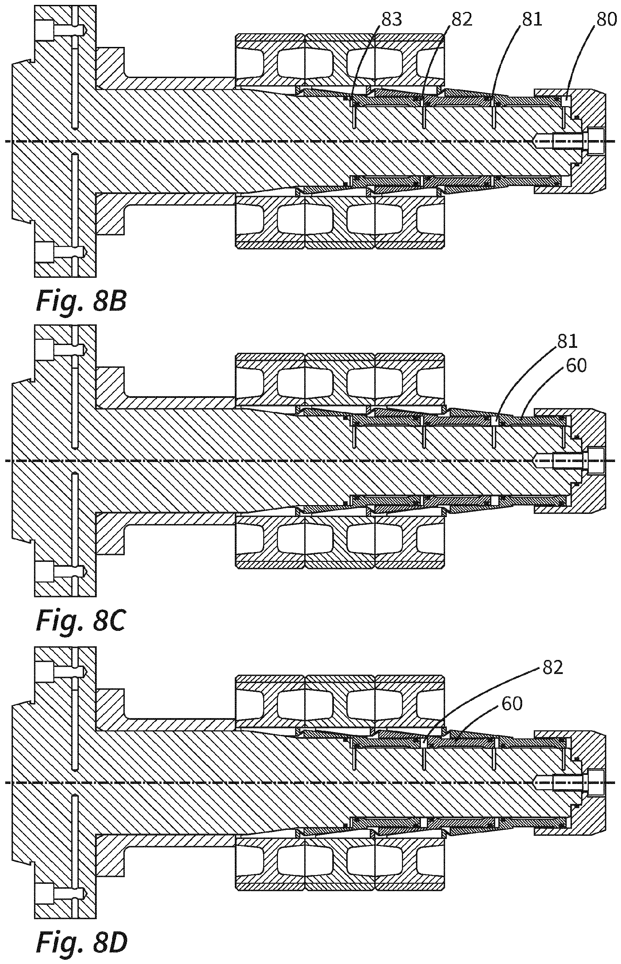

Anhand der Fig. 6 und den zugehörigen Fig. 7A bis 7D und 8A bis 8E werden die Vorgänge des Spannens und des Entspannens verdeutlicht. In Fig. 6 sind verschiedene Stadien des Spannens und Entspannens mittels gestrichelter Linien gekennzeichnet, deren Bezugszeichen jeweils der Figurennummer der zugeordneten Fig. entspricht.

Fig. 7A zeigt den Zustand des Spannmittels zum Zeitpunkt T0. Zu diesem Zeitpunkt sind die Kolbenkammern 81, 82, 83 durch Luftdruck oder Flüssigkeitsdruck druckbeaufschlagt, während die distale Kolbenkammer 80 noch nicht druckbeaufschlagt ist.

Ausgehend hiervon wird, wie in Fig. 6 verdeutlicht ist, zum Zeitpunkt t1 auch die distale Kolbenkammer 80 druckbeaufschlagt, so dass sie ab dem Zeitpunkt t2, wie die anderen Kolbenkammern 81, 82, 83 auch, druckbeaufschlagt ist. Dies führt für sich genommen noch nicht zu einer Verschiebung der Spannhülsen 60 oder einem Spannen, da kein in Richtung des proximalen Endes wirksamer Überdruck in einer der Kolbenkammern besteht.

Erst wenn zum Zeitpunkt t2 in der Kolbenkammer 83 die Druckbeaufschlagung entfällt, drückt der Druck in der distalen Kolbenkammer 80 alle drei Spannhülsen 60 in Richtung des proximalen Endes, wie in Fig. 7B gezeigt ist. An der proximalen ersten Spannhülse 60 führt dies dazu, dass der Spannabschnitt 62 mittels seiner innenliegenden Druckfläche 62B vom Außenkonus 16 nach außen gedrückt wird und somit am linken Werkstück 110 der gewünschte Spannungszustand erzielt wird. Dieses erste Werkstück 110 ist nun gespannt.

Anschließend wird bis zu den Zeitpunkten t4 und t5 jeweils noch die Druckbeaufschlagung der Kolbenkammern 82 und 81 gelöst, so dass nacheinander die zweite und die dritte Spannhülse 60 relativ zur jeweils linksseitig davon angeordneten Spannhülse 60 verschoben werden und dabei durch die an den linksseitig positionierten Spannhülsen vorgesehenen Außenkonusflächen 64 nach außen gedrückt werden. Wenn der Zustand der Fig. 7D erreicht ist, sind alle Werkstücke 110 gespannt, so dass die vorgesehene spanende Bearbeitung stattfinden kann. Nach erfolgter Bearbeitung werden die Werkstücke wieder entspannt.

Fig. 8A zeigt zunächst den noch gespannten Zustand. Bezugnehmend auf den Ablaufplan der Fig. 6 ist zu ersehen, dass nun zunächst die Druckbeaufschlagung der distalen Kolbenkammer 80 entfällt, wobei dies, wie Fig. 8B zeigt, zunächst noch nicht zu einer Verschiebung der Spannhülsen oder dem vollständigen Auflösen des Spannungszustands führt, da nun alle Kolbenkammern 80, 81, 82, 83 drucklos geschaltet sind.

Erst wenn beim Übergang zum Zeitpunkt t9 die Druckkammer 81 wieder druckbeaufschlagt wird, beginnt das tatsächliche Entspannen. Durch die Druckbeaufschlagung der Kolbenkammer 81 wird die proximal letzte Spannhülse 60 in Richtung des distalen Endes, also nach rechts verschoben. Hierdurch löst sich der Spannungszustand im Spannungsabschnitt 62 dieser Spannhülse. Anschließend wird, wie in Fig. 6 beim Übergang vom Zeitpunkt t10 zum Zeitpunkt t11 ersichtlich ist, die Druckbeaufschlagung der Kolbenkammer 81 wieder gelöst, was aber aufgrund der Tatsache, dass nun wieder alle Kolbenkammern 80, 81, 82, 83 drucklos sind, nicht zu einer Verlagerung der Spannhülsen 60 führt.

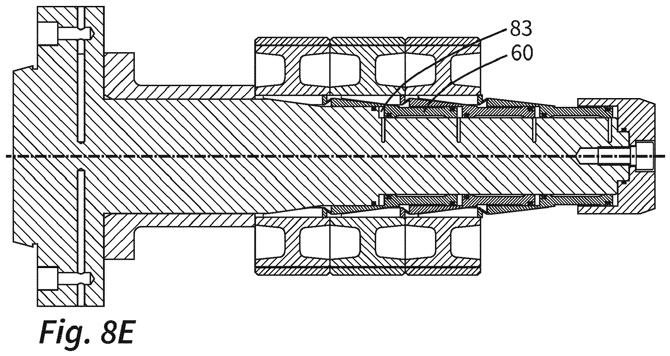

Erst wenn zu den Zeitpunkten t12 und t15 entsprechend der Fig. 8D und 8E die weiteren Druckkammern 82 und 83 nacheinander kurzfristig druckbeaufschlagt werden, werden die beiden weiteren Spannhülsen 60 nacheinander in Richtung des distalen Endes verlagert, so dass sich auch für die anderen beiden Werkstücke der Spannungszustand löst.

Ist der Zustand der Fig. 8E erreicht, so können alle Werkstücke gemeinsam vom Spannmittel entnommen werden.

## Patentansprüche

1. Innenspannmittel (100) zum Spannen einer Mehrzahl von Werkstücken (110) mit den folgenden Merkmalen:
a. das Innenspannmittel (100) weist eine Basis (10) mit einem in einer Haupterstreckungsrichtung ausgerichteten Spanndorn (14) mit einer Führungsfläche (14A) auf, und
b. das Innenspannmittel (100) weist mindestens zwei in Haupterstreckungsrichtung (2) verlagerbare Spannhülsen (60) auf, die über einen mittels Verlagerung aufweitbaren Spannabschnitt (62) verfügen, dessen Außenseite eine Spannfläche (62A) für jeweils eines der Werkstücke (110) aufweist, und
c. die mindestens zwei Spannhülsen (60) sind aus Richtung eines distalen Endes des Spanndorns (14) auf die Führungsfläche (14A) des Spanndorns aufgeschoben, **gekennzeichnet durch** das folgende zusätzliche Merkmal:
d. das Innenspannmittel (100) weist mindestens drei Kolbenkammern (80, 82, 84, 86) auf, die zwischen der Basis (10) und den mindestens zwei Spannhülsen (60) und zwischen den Spannhülsen (60) wirken.

2. Innenspannmittel (100) nach Anspruch 1 mit den folgenden weiteren Merkmalen:
a. das Innenspannmittel (100) weist mindestens drei in Haupterstreckungsrichtung (2) verlagerbare Spannhülsen (60) auf, und
b. das Innenspannmittel (100) weist mindestens vier Kolbenkammern (80,82, 84, 86) auf, die zwischen der Basis (10) und den mindestens zwei Spannhülsen (60) und zwischen den Spannhülsen (60) wirken.

3. Innenspannmittel (100) nach Anspruch 1 oder 2 mit den folgenden weiteren Merkmalen:
a. die Kolbenkammern (80,82,84,86) sind abschnittsweise durch die Spannhülsen (60) selbst gebildet und vorzugsweise in Form von Ringkammern ausgebildet.

4. Innenspannmittel (100) nach Anspruch 3 mit mindestens einem der folgenden weiteren Merkmale:
a. mindestens eine Kolbenkammer (82, 84) wird von der Führungsfläche des Spanndorns sowie von den zwei Spannhülsen umfänglich begrenzt, und/oder
b. die erste und/oder die letzte Kolbenkammer (80, 86) wird von der Basis (10) sowie von der proximal ersten bzw. der proximal letzten Spannhülse (60) umfänglich begrenzt.

5. Innenspannmittel (100) nach Anspruch 3 oder 4 mit dem folgenden weiteren Merkmal:
a. es sind Fluidkanäle (90, 92, 94, 96) vorgesehen, die den Spanndorn (14) durchdringen und durch Bohrungen in der Führungsfläche (14A) in die Kolbenkammern (80, 82, 84, 86) münden.

6. Innenspannmittel (100) nach einem der vorstehenden Ansprüche mit den folgenden weiteren Merkmalen:
a. die Spannhülsen (60) weisen an einer Innenseite des Spannabschnitts (62) eine konische Druckfläche (62B) auf, und
b. zur radialen Druckbeaufschlagung der Druckfläche (62B) sind Außenkonusflächen (64A, 16) vorgesehen.

7. Innenspannmittel (100) nach Anspruch 6 mit dem folgenden weiteren Merkmal:
a. es ist eine zur Basis ortsfeste Außenkonusfläche (16) und jeweils eine Außenkonusfläche (64) an den Spannhülsen (60) vorgesehen.

8. Innenspannmittel (100) nach einem der vorstehenden Ansprüche mit dem folgenden weiteren Merkmal:
a. die Spannhülsen (60) weisen jeweils einen Gleitabschnitt (66) mit einer Innenseite (66B) auf, die gleitend auf der Führungsfläche (14A) des Spanndorns (14) geführt ist, vorzugsweise mit dem zusätzlichen Merkmal:
b. auf der Innenseite (66B) ist eine Ausnehmung (66C) zur Fluidführung vorgesehen, die mit einer in distaler Richtung sich an den Gleitabschnitt (66) anschließenden Kolbenkammer (82, 84, 86) kommunizierend verbunden ist.

9. Innenspannmittel nach einem der vorstehenden Ansprüche mit dem folgenden weiteren Merkmal:
a. die Spannhülsen (60) sind einstückig ausgebildet.

10. Innenspannmittel nach einem der vorstehenden Ansprüche mit dem folgenden weiteren Merkmal:
a. die Spannhülsen (60) sind baugleich ausgebildet.

11. Innenspannmittel nach einem der vorstehenden Ansprüche mit mindestens einem der folgenden weiteren Merkmale:
a. die Führungsfläche (14A) ist zylindrisch ausgebildet, und/oder
b. am distalen Ende des Spanndorns (14) ist eine Anschlagskappe (22) vorgesehen, und/oder
c. auf den Spanndorn (14) ist eine Abstandshülse (20) aufgeschoben, die einen Anschlag für eine proximal erste Spannhülse oder für ein Werkstück (110) bildet, und/oder

12. Verfahren zum Spannen einer Mehrzahl von Werkstücken (110) mittels eines Innenspannmittels (100) gemäß einem der vorstehenden Ansprüche mit den folgenden Schritten:
a. mittels des Drucks in den Kolbenkammern (80, 82, 84, 86) werden die Spannhülsen (60) in eine Relativlage zueinander verbracht, in der die Spannabschnitte (62) nicht oder gering gespannt sind, und
b. durch Senken des Fluiddrucks in einer ersten Kolbenkammer (80) oder Erhöhen des Fluiddrucks in einer weiteren und/oder letzten Kolbenkammer (82, 84, 86) wird der Spannabschnitt (62) der proximal ersten Spannhülse (60) gespannt und dadurch das erste Werkstück (110) festgespannt, und
c. durch nachfolgendes Senken des Fluiddrucks in der zweiten Kolbenkammer (82) oder Erhöhen des Fluiddrucks in einer weiteren oder der letzten Kolbenkammer (84, 86) wird der Spannabschnitt (62) der proximal zweiten Spannhülse (60) gespannt und dadurch das zweite Werkstück (110) festgespannt.

13. Verfahren zum Entspannen einer Mehrzahl von Werkstücken mittels eines Innenspannmittels gemäß einem der vorstehenden Ansprüche mit den folgenden Schritten:
a. mittels des Drucks in den Kolbenkammern (80, 82, 84, 86) werden die Spannhülsen (60) nacheinander derart verlagert, dass das die Spannung in ihren Spannabschnitte (62) verringert wird.
